# EUROPÄISCHE PATENTSCHRIFT

(11) **EP 0 257 229 B1**
(45) Veröffentlichungstag und Bekanntmachung des Hinweises auf die Patenterteilung: **03.04.1996**
(21) Anmeldenummer: 87109028.8
(22) Anmeldetag: 23.06.1987
(51) Int. Cl.: G01N 21/25, G01J 1/16, G01J 1/10

(54) **Fotometer**
Fotometer
Photomètre

(30) Priorität: 11.08.1986 DE 3627232
(43) Veröffentlichungstag der Anmeldung: 02.03.1988
(73) Patentinhaber: LEYBOLD AKTIENGESELLSCHAFT, D-63450 Hanau (DE)
(72) Erfinder: Boos, Michael, D-6450 Hanau 7 (DE); Klug, Werner, D-6463 Freigericht (DE); Zöller, Alfons, D-6483 Bad Soden-Salmünster (DE)
(74) Vertreter: Schickedanz, Willi, Dipl.-Ing.

(56) Entgegenhaltungen:
- DE-A- 2 655 272
- DE-A- 3 406 645
- DE-C- 671 864
- DE-C- 718 434
- FR-A- 1 389 955
- GB-A- 1 011 941
- US-A- 3 089 382
- US-A- 3 885 879
- PATENT ABSTRACTS OF JAPAN Band 8, Nr. 101 (P-273)(1538), 12 Mai1984; & JP-A-59 012 322

## Beschreibung

Die Erfindung betrifft einen Fotometer nach dem Oberbegriff des Patentanspruchs 1.

Fotometer werden vielfach für die Messung von Transmissionen oder Reflexionen verwendet. Eine bekannte Anwendung von Fotometern ist die Messung der Dicke von aufgedampften Schichten auf Glasscheiben oder dergleichen. Diese Schichten sind sehr dünn und liegen in der Größenordnung von Lichtwellenlängen, was ihre Messung erschwert.

Es ist bereits ein Mehrkanal-Prozeß-Spektrometer bekannt, das eine Beleuchtungseinrichtung, eine Sensoreinrichtung und eine Spektrometereinrichtung aufweist, wobei die Sensoreinrichtung über eine erste Lichtleitfaser mit der Beleuchtungseinrichtung und eine zweite Lichtleitfaser mit der Spektrometeranordnung verbunden ist (DE-PS 34 03 372). Eine Meßprobe, die sich innerhalb der Sensoreinrichtung befindet, wird hierbei von dem Licht, das aus der ersten Lichtleitfaser kommt, durchstrahlt, wobei das durch die Probe dringende Licht von der zweiten Lichtleitfaser aufgenommen und weitergeleitet wird. Bei diesem Spektrometer handelt es sich indessen um ein Einstrahlgerät ohne Zerhacker und mit kontinuierlicher Meßphase.

Es ist außerdem ein elektromechanischer Licht-Chopper für vier verschiedene Wellenlängen bekannt, bei dem das Licht nach Passieren eines Filters mittels eines Lichtleitkabels zum Versuchsobjekt geleitet wird (DD-PS 216 323). Dieser Chopper ist indessen nicht für die Erzeugung einer Referenz- und Dunkelphase geeignet.

Weiterhin ist ein Kolorimeter bekannt, das eine Lampe aufweist, die Licht im sichtbaren Spektrum aussendet, das über einen Lichtleiter zu einer Probe geführt wird (DE-OS 26 31 770). Dieses Kolorimeter betrifft jedoch ein Einstrahlgerät ohne Zerhacker. Das vorgesehene Filterrad dient lediglich zum Umschalten der Meßwellenlänge.

Es ist ferner eine Spektralfotometeranordnung für die Messung der optischen Eigenschaften transparenter, reflektierender und strahlender Materie in Abhängigkeit von der Lichtwellenlänge, insbesondere für die Messung der Veränderung der optischen Eigenschaften während der Erzeugung dünner Schichten auf Substraten in Vakuumkammern, bekannt, die eine spektrale Lichtzerlegungseinrichtung und eine Reihe von Meßzellen aufweist (DE-OS 34 06 645). Mit dieser Spektralfotometeranordnung soll erreicht werden, daß unter Beibehaltung der Meßgenauigkeit mit einem einzigen Meß- und Auswertesystem eine größere Zahl von voneinander unabhängigen Meßstellen bzw. Meßobjekten erfaßt werden kann. Um dieses Ziel zu erreichen, wird jeder Meßstelle mindestens je ein Glasfaserkabel zugeordnet, wobei die Glasfaserkabel unmittelbar benachbart und parallel zueinander angeordnet sind. Das einzelne Meßobjekt ist dabei u. a. zwischen den Enden zweier Glasfaserleitungen angeordnet, von denen die eine Glasfaserleitung mit einer Lichtquelle und die andere Glasfaserleitung mit einer Auswerteeinrichtung verbunden ist. Obwohl bei dieser bekannten Spektralfotometeranordnung Glasfasern eingesetzt werden, handelt es sich nicht um eine auf dem Zerhackerprinzip beruhende Anordnung, sondern um ein sogenanntes Einstrahlgerät ohne Zerhacker. Die den Glasfasern zugeordneten Blenden können nur zum Umschalten der Meßstellen und nicht zum Erzeugen einer Meß-, Referenz-und Dunkelphase verwendet werden.

Lichtleitfasern werden auch bei einer anderen bekannten photometrischen Analyseeinrichtung verwendet (DE-OS 26 30 645). Diese bekannte Analyseeinrichtung betrifft jedoch ein gechopptes Einstrahlsystem mit einer Meßund Dunkelphase. Die Referenz wird zeitgleich mit der Meßphase durch einen zweiten Detektor gebildet.

Ein Zweistrahlfotometer mit einem 3-Phasen-Chopper ist indessen ebenfalls bekannt (US-PS 4 305 663). Dieses Zweistrahlfotometer weist jedoch keine Lichtleitereinrichtung auf.

Weiterhin ist ein Gegentaktphotometer mit einer Lichtleitoptik bekannt, bei dem im schnellen Wechsel Lichtströme von Prüfling und Vergleichsnormal bzw. Vergleichsstrahlengang auf eine Photozelle fallen (DE-PS 718 434). Hierbei ist die zur Phaseneinstellung der beiden Lichtbündel gegengegeneinander an der Lochscheibe, die in einer Unterbrechungsstelle der Lichtleitoptik mit ihrer Lochreihe hineinragt, eine in der Bewegungsrichtung der Lochscheibe verstellbare Lichtleitanordnung mit der Lochscheibe bzw. der Lichtleitoptik zugewendeten Lichtein- und -austrittsflächen vorgesehen. Bei diesem bekannten Gegentaktphotometer entspricht die Breite der Lichteintritts- und -austrittsfläche der Lochbreite der Lochscheibe, während der Querschnitt der das Lichtbündel zu- und abführenden Lichtleitoptik größer ist. Ferner ist der Querschnitt des Vergleichsstrahlengangs am Orte der Zerhackung, z. B. durch Blenden, auf dem Querschnitt der verstellbaren Lichtleitanordnung angebracht.

Dieses bekannte Gegentaktphotometer ist ein Zweiphasenzerhacker ohne Dunkelphase, bei dem die Zerhackerscheibe nicht zwischen Lichtquelle und Lichtleitereinrichtung angeordnet ist. Der Nachteil, der mit einem solchen Photometer verbunden ist, besteht insbesondere darin, daß bei der Einkoppelung des Lichts in den Lichtleiter große Lichtverluste entstehen.

Schließlich ist auch noch ein Fotometer mit einem Meßstrahl und einem Referenzstrahl bekannt, wobei die Lichtströme über Keile abgeglichen werden (USSR-PS 384 003). Die von einer Lichtquelle ausgesendeten Lichtströme werden dabei mit Hilfe eines Lichtzerhackers und Lichtleitvorrichtungen auf einen Detektor gegeben. Nachteilig ist bei diesem Fotometer, daß die Lichteinkopplung zur Meßstelle über eine Linse erfolgt. Hierdurch können schwer zugängliche Meßstellen nicht oder nur mit sehr großem Aufwand beleuchtet werden, weil die Lampen- und Zerhackereinheit in der Nähe der Meßstelle angeordnet sein muß. Entsprechendes gilt für die Lichteinkopplung in den Referenzlichtleiter, die ebenfalls über eine Linse erfolgt. Außerdem ist bei diesem Fotometer keine Dunkelphase vorgesehen.

Der Erfindung liegt die Aufgabe zugrunde, ein Fotometer mit geringen Lichtverlusten zu schaffen, bei dem durch die Verwendung von nur einem Lichtdetektor eine automatische Driftkompensation erfolgt.

Der mit der Erfindung erzielte Vorteil besteht darin, daß mittels eines Zerhackers eine Meßphase, eine Referenzphase und eine Dunkelphase erzeugt werden können, wobei diese verschiedenen Phasen zeitlich versetzt sein können. Außerdem ist es möglich, fotometrische Messungen in einer Vakuumbeschichtungsanlage mit hoher Langzeitstabilität durchzuführen. Durch den Einsatz von Lichtleitern in Verbindung mit dem Dreiphasen-Zerhacker kann ein Zweistrahlprinzip in einer Anlage realisiert werden. Da die Messung von Meß- und Referenzlicht aufgrund des zeitlichen Versatzes dieser Größen mit demselben Detektor erfolgen kann, werden die Lichtquellen- und die Detektordrift kompensiert.

Ausführungsbeispiele der Erfindung sind in der Zeichnung dargestellt und werden im folgenden näher beschrieben. Es zeigen:
- Fig. 1: eine Prinzipdarstellung des erfindungsgemäßen Fotometers;
- Fig. 2: eine Zerhacker-Anordnung in einer ersten Position;
- Fig. 3: die Zerhacker-Anordnung gemäß Fig. 2 in einer zweiten Position;
- Fig. 4: die Zerhacker-Anordnung gemäß Fig. 2 in einer dritten Position;
- Fig. 5: eine perspektivische Ansicht der in den Fig. 2 - 4 dargestellten Zerhacker-Anordnung;
- Fig. 6: eine zweiarmige Lichtleitervorrichtung, deren einer Arm das Signal vom Meßobjekt aufnimmt und deren anderer Arm ein Referenzsignal enthält;
- Fig. 7: einen ummantelten Lichtleiter, dessen eines Ende zur Beleuchtung des Meßobjekts dient und dessen anderes Ende ein zerhacktes Lichtsignal empfängt;
- Fig. 8: ein erstes Ende eines Lichtleiters mit kreisrundem Faserbündel, welches das auf ein Meßobjekt gegebene und vom Meßobjekt kommende Licht aufnimmt bzw. abgibt;
- Fig. 9: ein zweites Ende des Lichtleiters gemäß Fig. 8 mit einem rechteckigen Lichtleitfaserbündel;
- Fig. 10: eine Kombination von Lichtleiterfaserbündeln in einem rechteckigen Querschnitt, wobei das mittlere Lichtleiterfaserbündel Licht abgibt;
- Fig. 11: die in der Fig. 10 gezeigte Kombination der Lichtleitfaserbündel, wobei die beiden äußeren Bündel Licht abgeben;
- Fig. 12: zwei in Einzelbündel aufgeteilte Lichtleitfaserbündel, deren Einzelbündel ineinandergeschaltet sind, wobei die Einzelbündel des einen Lichtleitfaserbündels Licht abgeben;
- Fig. 13: die beiden Lichtleitfaserbündel gemäß Fig. 12, wobei die Einzelbündel des anderen Lichtleitfaserbündels Licht abgeben;
- Fig. 14: den Lichtintensitätsverlauf über der Zeit;
- Fig. 15: ein Blockschaltbild eines Meßverstärkers;
- Fig. 16: ein Blockschaltbild einer digitalen, phasensynchronen Gleichrichterschaltung;
- Fig. 17: ein Übersichtsblockschaltbild eines Mikroprozessors mit verschiedenen Anschaltungen;
- Fig. 18: Zeitdiagramme einer digitalen, phasensynchronen Gleichrichterschaltung für drei Phasen.

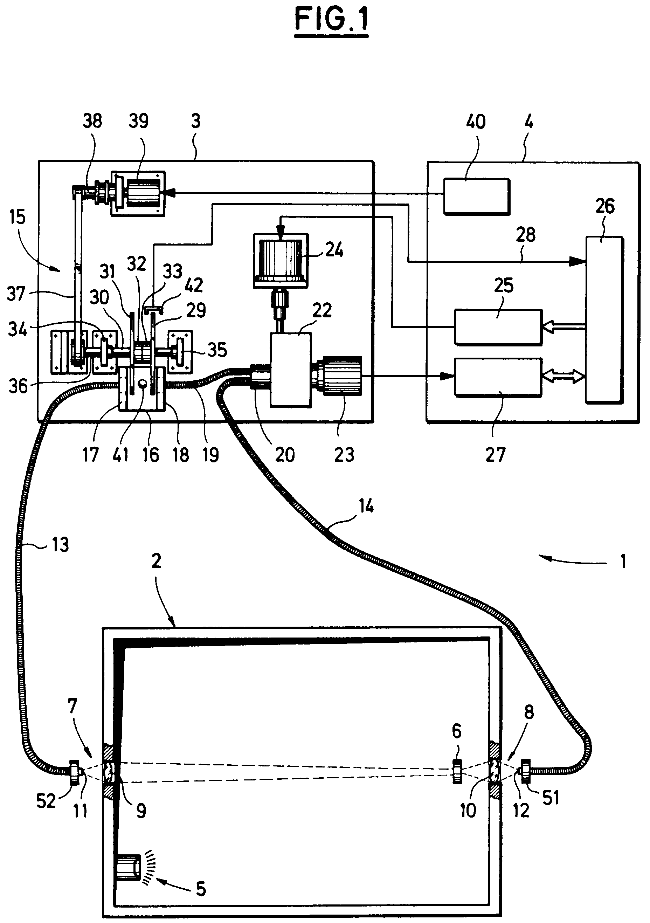

In der Figur 1 ist eine Prinzipanordnung eines erfindungsgemäßen Fotometers 1 dargestellt. Dieses Fotometer 1 ist mit einer Meßkammer 2 verbunden und weist einen Meßwandler 4 und eine Signalverarbeitung 4 auf. In der Meßkammer 2, die beispielsweise die Vakuumkammer einer Beschichtungsanlage ist, befindet sich eine Verdampferquelle 5, die Metall-oder Metalloxid-Dämpfe aussendet, welche sich auf einem Testglas 6 oder einem sonstigen Substrat niederschlagen. Dieses Testglas 6 befindet sich zwischen zwei Öffnungen 7, 8 in der Meßkammer 2, wobei diese Öffnungen durch jeweils eine optische Linse 9 bzw. 10 abgeschlossen sind. Außerhalb der Meßkammer 2 und in geringem Abstand von den Linsen 9, 10 sind die Enden von Lichtleiterbündeln 11,12 angeordnet, die durch flexible Metallrohre 13,14 ummantelt sind. Das im Metallrohr 13 befindliche Lichtleiterbündel ist einer Zerhacker-Einrichtung 15 zugeführt. Diese Zerhacker-Einrichtung besteht aus einer Zerhacker-Kammer 16 mit zwei Wänden 17,18, wobei in die eine Wand 17 das zweite Ende des im Metallrohr 13 befindlichen Lichtleiterbündels eingeführt ist. Dagegen ist in die andere Wand 18 ein Referenz-Lichtleiterbündel 19 eingefügt, das zu einem Bündelkoppler 20 führt, der mit dem Lichtleiterbündel im Metallrohr 14 verbunden ist. Dieser Bündelkoppler 20 ist mit einem Monochromator 22 verbunden, an den ein Detektor 23 angekoppelt ist. Zum Antrieb von Strichgittern oder Interferenzfiltern im Monochromator 22 ist ein Schrittmotor 24 vorgesehen, der von einem Leistungsteil 25 in der Signalverarbeitung 4 gesteuert wird. Dieser Leistungsteil 25 wird seinerseits von einer Verarbeitungseinrichtung 26 gesteuert, der u. a. die Signale des Detektors 23 über einen Wandler 27 zugeführt werden. Diese Verarbeitungseinrichtung 26 wird auch über eine Leitung 28 mit Informationen einer Gabellicht-Schranke 42 beaufschlagt, welche den Ist-Wert der Umdrehung einer Zerhacker-Scheibe 29 anzeigt. Diese Zerhacker-Scheibe 29 ist auf einer Welle 30 angeordnet, auf der sich noch eine zweite Zerhacker-Scheibe 31 befindet. Beide Zerhacker-Scheiben 29,31 sind durch Distanzstücke 32,33 voneinander getrennt und starr mit der Welle 30 verbunden. Die Enden der Welle 30 sind in Lagern 34,35 gelagert, wobei an dem einen Ende 36 ein Antriebsriemen 37 angreift, der von einer Motorwelle 38 angetrieben wird. Diese Motorwelle 38 ist mit einem Motor 39 verbunden, der von einer Motorsteuereinheit 40 angetrieben wird. Zwischen den beiden Zerhacker-Scheiben 29,31 ist eine Lampe 41 angeordnet, welche Licht auf die Referenzstrecke und zeitversetzt auf die Meßstrecke gibt.

Mit Hilfe der in der Fig. 1 dargestellten Anordnung kann die absolute Reflexion oder Transmission der auf das Testglas 6 aufgedampften Schicht mit hoher Langzeitstabilität gemessen werden. Dies geschieht dadurch, daß mit Hilfe der Zerhacker-Scheiben 29,31 eine Meßphase, eine Referenzphase und eine Dunkelphase erzeugt werden. Da hier Meß- und Referenzphase zeitlich versetzt erfolgen, können beide Phasen mit demselben Detektor 23 und bei der gleichen Wellenlänge des Monochromators 22 gemessen werden. Die Meßphase wird durch das Lichtleiterbündel im Metallrohr 13 sowie durch die Zerhacker-Scheibe 31 bestimmt, während die Referenzphase durch das Lichtleiterbündel im Metallrohr 19 und durch die Zerhacker-Scheibe 29 bestimmt wird.
Während der Meßphase wird ein Teil des Lichts der Lampe 41 über das Lichtleiterbündel im Metallrohr 13 der Linse 9 zugeführt. Von dieser gelangt es auf das Testglas 6 und über die Linse 10 in das Lichtbündel 12 im Metallrohr 14 sowie zum Bündelkoppler 20 und von dort in den Monochromator 22. Im Monochromator 22 wird ein bestimmter Wellenlängenbereich des ankommenden Lichts ausgefiltert und dem Detektor 23 zugeführt. Dieser wandelt das optische Signal in ein elektrisches Signal um und führt es einem Wandler 27 zu, der es nach entsprechender Anpassung an die Verarbeitungseinrichtung 26 weitergibt.

Während der Referenzphase wird das Licht der Lampe 41 durch die Zerhacker-Scheibe 29 auf das Lichtleitbündel im Metallrohr 19 freigegeben. Es gelangt hierauf ebenfalls über den Bündelkoppler 20 auf den Monochromator 22 und wird von dort in derselben Weise wie das Licht in der Meßphase über den Detektor 23 und den Wandler 27 dem Prozessor 26 zugeführt.

Auf diese Weise wird in einer ersten Phase das Licht der Lampe 41 in einer durch die auf die Glasplatte 6 aufgedampften Schicht geschwächten Form dem Detektor 23 zugeführt, während in einer zweiten Phase das ungeschwächte Licht der Lampe 41 dem Detektor 23 zugeführt wird. Für bestimmte Anwendungsfälle kann auf den Monochromator 22 verzichtet werden. Wenn es jedoch darauf ankommt, die Wellenlängenabhängigkeit der Transmission oder Reflexion zu erfassen, kann auf den Monochromator oder ein anderes dispersives Element nicht verzichtet werden.
Da in beiden Phasen dieselbe Lampe 41 und derselbe Detektor 23 verwendet werden, wirken sich Alterserscheinungen und Temperaturdriften von Lampe 41 und/oder Detektor 23 in gleicher Weise auf beide Phasen aus, d. h. die Fehler kompensieren sich.
Die Dunkelphase dient zur Kompensation von Fehlern, die durch Fremdlichteinflüsse und/oder durch Driften: von elektronischen Verstärkern entstehen. Es werden also stets die Differenzen zwischen Meß- und Dunkelphase bzw. von Referenz- und Dunkelphase ausgewertet. Das Verhältnis zwischen den so ermittelten Meß- und Referenzwerten ist somit ein unverfälschtes Maß für die Reflexion bzw. Transmission der auf die Glasplatte 6 aufgedampften Schicht.
Der Einsatz des Monochromators 22 ist insbesondere dann unerläßlich, wenn die aufwachsende optische Schichtdicke gemessen wird, d. h. wenn die optische Intensität bei einer bestimmten Wellenlänge nach einer bestimmten Funktion verläuft.

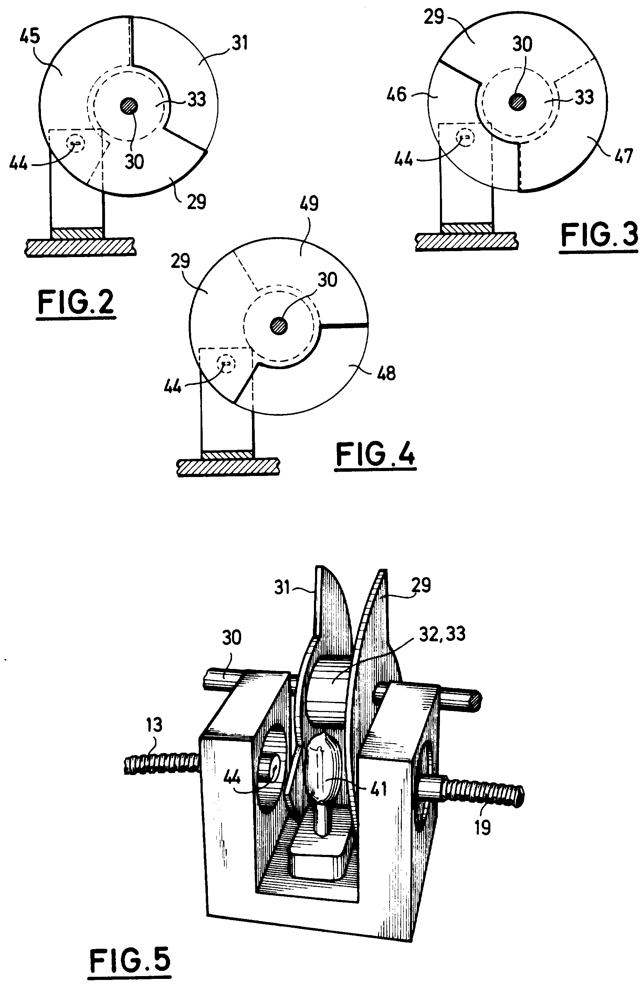

In der Fig. 2 ist eine erste Konstellation zwischen den Zerhacker-Scheiben 29,31 dargestellt. Man erkennt hierbei, daß die Zerhacker-Scheibe 29 einen Ausschnitt aufweist, der etwa 120° innerhalb eines äußeren Kreisrings ausmacht. Das Ende 44 des im Metallrohr 13 befindlichen Glasfaserbündels ist hinter der Zerhacker-Scheibe 29 gestrichelt dargestellt. Der Zerhacker-Scheibe 31 weist ebenfalls einen Ausschnitt von etwa 120° in einem äußeren Kreisring auf. Dieser Ausschnitt befindet sich an der mit 45 bezeichneten Stelle. Bei dieser Konstellation wird das Referenzlicht gesperrt und das Meßlicht freigegeben.

Die Fig. 3 zeigt eine zweite Konstellation zwischen den Zerhacker-Scheiben 29,31. Der Ausschnitt in der Zerhacker-Scheibe 29 befindet sich hierbei an der mit 46 bezeichneten Stelle, während sich der Ausschnitt in der Zerhacker-Scheibe 31 an der mit 47 bezeichneten Stelle befindet. In dieser Stellung wird der Meßwert gesperrt und der Referenzwert freigegeben.

In der Fig. 4 ist eine dritte Konstellation zwischen den Zerhacker-Scheiben 29,31 gezeigt, wobei sich der Ausschnitt in der Zerhacker-Scheibe 29 an der Stelle 48 befindet. Dagegen befindet sich der Ausschnitt in der Zerhacker-Scheibe 31 an der Stelle 49.

Hierbei werden sowohl der Meßwert als auch der Referenzwert gesperrt; d. h. es herrscht Dunkelphase.

In der Fig. 5 ist die in den Fig. 2,3,4 gezeigte Zerhacker-Vorrichtung noch einmal in perspektivischer Ansicht dargestellt. Man erkennt hierbei die Enden der Metallrohre 13,19, die Lampe 41 sowie die Zerhacker-Scheiben 29,31. Da die beiden Zerhacker-Scheiben 29,31 jeweils eine Aussparung von 120° aufweisen, die relativ zueinander so angeordnet sind, daß sie sich nicht überlappen, kann eine Phase erreicht werden, in der das Licht der Lampe 41 sowohl zum Ende 44 als auch zum Bündel des Rohrs 19 abgeriegelt wird.

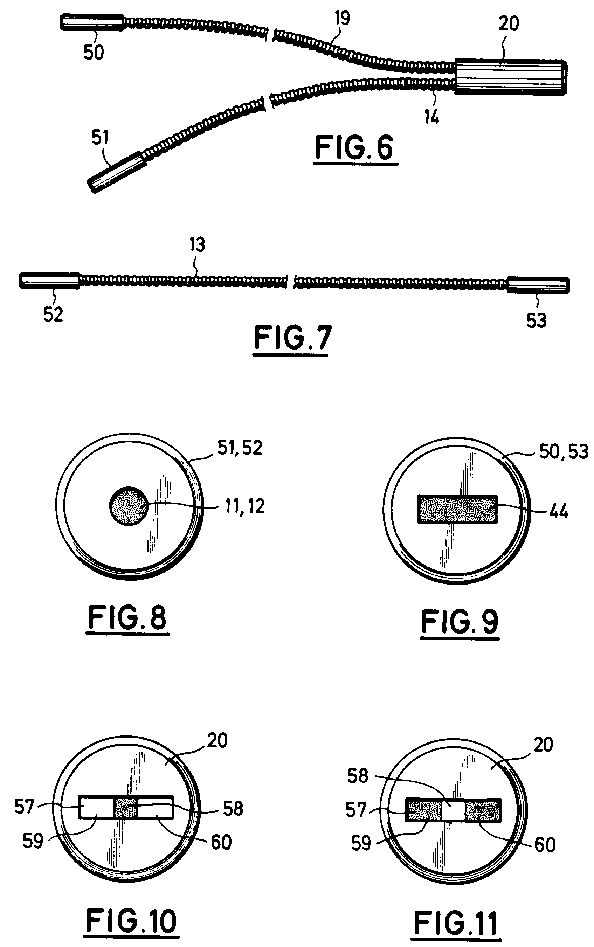

Die Fig. 6 zeigt eine Variante des Bündelkopplers 20 mit den beiden flexiblen Metallrohren 19,14, in denen sich die lichtleitenden Glasfaserbündel befinden.

Die Enden dieser Metallrohre 14,19 sind an zylindrische Verbindungsbuchsen 50,51 angeschlossen.

Die Fig. 7 zeigt ein Metallrohr 13, das an seinen beiden Enden mit zylindrischen Verbindungsbuchsen 52,53 versehen ist.

In der Fig. 8 ist eine Verbindungsbuchse gezeigt, die den Verbindungsbuchsen 51,52 in den Figuren 6 bzw. 7 entspricht. In dieser Verbindungsbuchse 51,52 ist das Ende des kreisrunden Glasfaserbündels 11,12 zu erkennen.

Die Fig. 9 zeigt eine Verbindungsbuchse, die den Verbindungsbuchsen 50, 53 in den Figuren 6 bzw. 7 entspricht. Die in den Figuren 6 bzw. 7 dargestellten Verbindungsbuchsen 50,53 müssen nicht identisch sein; sie sind in der Regel jedoch ähnlich, so daß sie beide durch die eine Darstellung der Fig. 9 repräsentiert werden. Das Glasfaserbündel 44 hat hier eine rechteckige Form, die für die Einkopplung der Lichtleistung von Lampe und Lichtleiter oft vorteilhaft ist. Bei Verwendung einer Halogenlampe wird dadurch der Lichtleiterbündelquerschnitt dem Querschnitt des Lampenwendels angepaßt.

In der Fig. 10 ist der Bündelkoppler 20 dargestellt, der einen rechteckigen Schlitz 57 aufweist, in dem das Ende des Lichtleitfaserbündels 58 angeordnet ist, das sich im Metallrohr 19 befindet. Auf beiden Seiten des Bündels 58 befindet sich je eine Hälfte 59,60 des Bündels, welches aus der Verbindungsbuchse 51 (Fig. 6) kommt. Durch die Darstellung der Fig. 10 soll angedeutet werden, daß nur das Bündel 58 Licht abstrahlt, während die Bündelhälften 59,60 kein Licht abstrahlen.

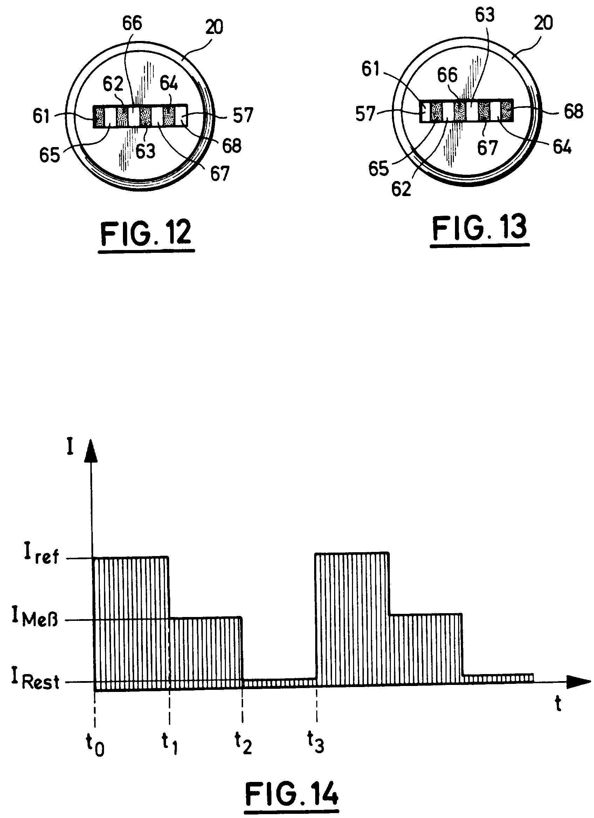

Die Darstellung der Fig. 11 unterscheidet sich von der Darstellung der Fig. 10 dadurch, daß jetzt die Bündelhälften 59,60 Licht abgeben, während das Bündel 58 inaktiv ist. Die Fig. 10 zeigt also die Referenzphase, während die Fig. 11 die Meßphase zeigt.

In den Fig. 12 und 13 sind zwei Lichtleitbündel dargestellt, die in jeweils vier Teillichtbündel 61,62,63,64 bzw. 65,66,67,68 aufgeteilt und ineinandergeschachtelt sind. In der Fig. 12 geben die Teillichtbündel 61-64 Licht ab, während die Teillichtbündel 65-68 inaktiv sind. Bei der Darstellung der Fig. 13 sind die Verhältnisse gerade umgekehrt. Beide Lichtbündel zusammen füllen den Schlitz 57 aus.

In der Fig. 14 ist die Lichtintensität I in Abhängigkeit von der Zeit dargestellt. Es handelt sich hierbei um die vom Detektor 23 erfaßte Lichtintensität. Zwischen t₀ und t₁ wird das Referenzsignal I_{REF} erfaßt, das in diesem Beispiel die höchste Amplitude hat. Hieran anschließend, d.h. zwischen t₁ und t₂, wird das Meßsignal I_{MEB} erfaßt, das beispielsweise durch die Aufdampfung eines Materials auf der Scheibe 6 geschwächt ist. Während der Zeit t₂ bis t₃ liegt eine Dunkelphase vor, so daß nur noch die Restlichtstärke I_{REST} detektiert wird. Bei dieser Restlichtstärke kann es sich um Streulicht, beispielsweise von der Verdampferquelle 5 handeln.

Das vom Detektor 23, bei dem es sich um ein Siliziumelement handeln kann, abgegebene Spannungssignal wird digitalisiert, um es anschließend mit numerisch im voraus berechneten I/t-Kurven vergleichen und um automatisch die optimale Verstärkung von I_{REF}, I_{MEB} und I_{REST} einstellen zu können. Durch die Verwendung eines Spannungs-Frequenz-Umsetzers bei der Digitalisierung kann eine hohe Auflösung erreicht werden.

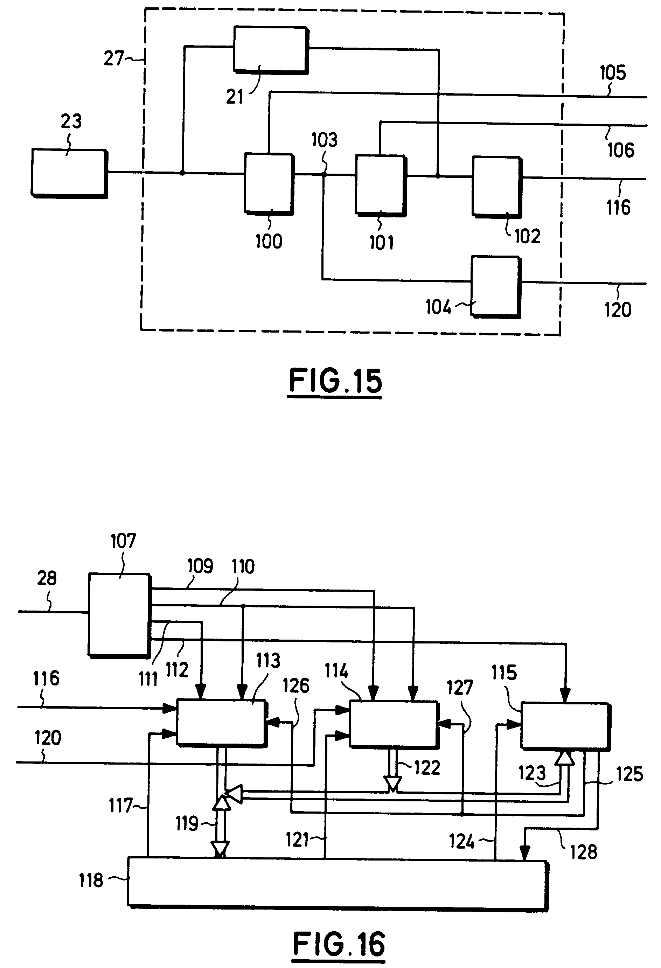

In der Fig. 15 ist ein Blockschaltbild eines Meßverstärkers 27 für das Ausgangssignal des Detektors 23 gezeigt, mit dem die Spannung in eine entsprechende Frequenz umgewandelt wird. Der Ausgang des Detektors 23 ist mit einem ersten Vorverstärker 100 verbunden, dessen Ausgang an dem Eingang eines zweiten Vorverstärkers 101 liegt. Der Ausgang dieses zweiten Vorverstärkers 101 ist auf einen Spannungs-Frequenz-Wandler 102 gegeben, der die Amplitude der Ausgangsspannung des Vorverstärkers 101 in eine proportionale Frequenz umwandelt. Am Ausgang des Spannungs-Frequenz-Wandlers 102 steht somit ein Signal an, dessen Frequenz der Meßgröße entspricht.

An dem Verbindungspunkt 103 zwischen den Verstärkern 100 und 101 wird ein Signal abgegriffen, das einem Spannungs-Frequenz-Wandler 104 zugeführt und in ein frequenzproportionales Signal umgewandelt wird. Die Verstärkungen der Verstärker 100 bzw. 101 können von der Verarbeitungseinrichtung 26 über die Leitungen 105 bzw. 106 eingestellt werden.

Bei dem Block 71 handelt es sich um eine Schaltungsanordnung, welche ein Signal gegenschaltet, daß z. B. zur Kompensation von Pegelüberschreitungen dient.

Die Fig. 16 zeigt das Blockschaltbild eines Lock-in-Verstärkers für drei Phasen. Dieser Lock-in-Verstärker kann Teil der Verarbeitungseinrichtung 26 sein. Es weist eine PLL-Schaltung 107 auf, die über die Leitung 28 mit einem Triggersignal von der Lichtschranke 42 des Zerhackers beaufschlagt wird. Diese PLL-Schaltung 107 weist vier Ausgänge 109,110,111, 112 auf, von denen der Ausgang 109 die Referenzphase, der Ausgang 110 die Meßphase und der Ausgang 111 die Dunkelphase bezeichnet. Der Ausgang 112 gibt das Ende der Zerhackerphase an. Die Ausgänge der PLL-Schaltung 107 sind mit Zählerschaltungen 113,114,115 verbunden, und zwar in der Weise, daß die Ausgänge 110,111 mit dem Zähler 113, die Ausgänge 109,110 mit dem Zähler 114 und der Ausgang 112 mit dem Zähler 115 verbunden sind. Der Zähler 113 zählt in der Meßphase hoch und in der Dunkelphase herunter. Dagegen zählt der Zähler 114 in der Referenzphase hoch und in der Dunkelphase herunter. Der Zähler 115 zählt die Zerhackerumdrehungen.

Dem CL-Eingang 116 des Zählers 113 wird das Ausgangssignal des Spannungs-Frequenz-Wandlers 102 zugeführt. Der Read-Eingang des Zählers 113 ist dagegen mit einer Schnittstelle zum Mikroprozessor 118 verbunden. Zwischen diesem Mikroprozessor und dem Zähler 113 findet über den Kanal 119 ein Informationsaustausch während der Meß- und Dunkelphase statt.

Dem CL-Eingang des Zählers 114 wird über eine Leitung 120 ein Intensitätssignal zugeführt, das dem Referenzsignal-Dunkelstrom entspricht, d.h. dem Ausgangssignal am Spannungs-Frequenz-Wandler 104. Auf den Read-Eingang dieses Zählers 114 wird über die Leitung 121 ein Signal aus dem Prozessor 118 zugeführt. Außerdem ist der Zähler 114 über einen Kanal 122 mit dem Kanal 119 verbunden. Eine Verbindung zu den Kanälen 122,119 wird durch einen Kanal 123 auch zu dem Zähler 115 hergestellt. Über den Kanal 123 wird die Anzahl der zu messenden Zerhacker-Perioden programmiert. Der Schreib-Eingang 124 des Zählers 115 ist mit dem Prozessor 118 verbunden. Von dem Ausgang 125 des Zählers 115 werden die Reset-Eingänge 126,127 der Zähler 113,114 beaufschlagt. Eine Average-Leitung 128 verbindet einen Ausgang des Zählers 115 mit dem Prozessor 118 und zeigt an, wenn ein vorprogrammiertes Intervall beendet ist.

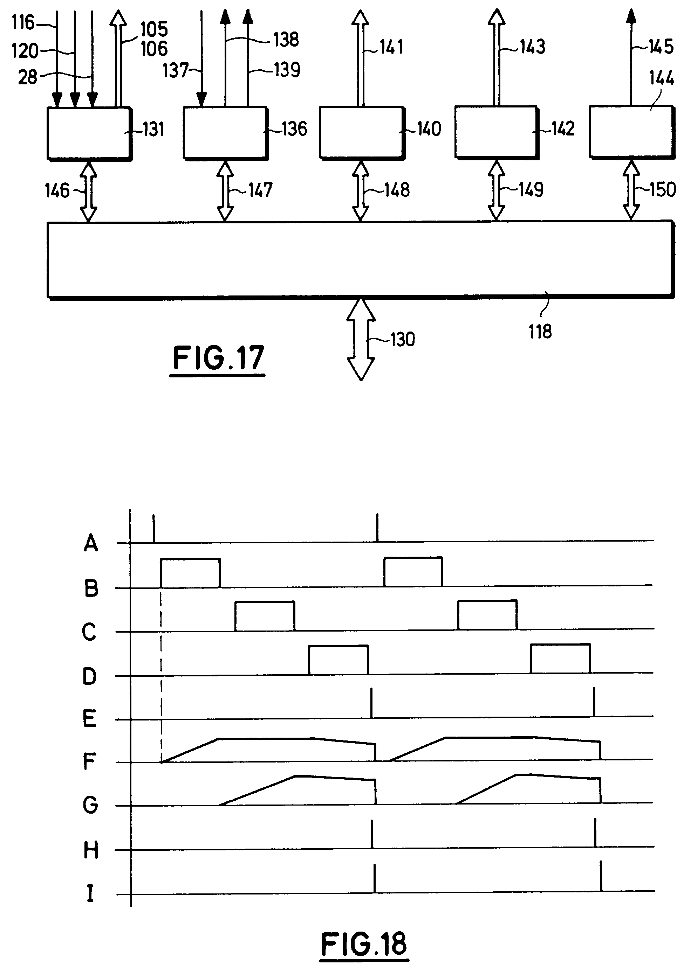

Die Fig.17 ist eine übergeordnete Darstellung und zeigt das Blockschaltbild einer Fotometerplatine, die einen Mikroprozessor 118 mit einem RAM/EPROM-Speicher aufweist, der beispielsweise über einen Kanal 130 mit einem nicht dargestellten Rechnerkreis verbunden ist. Mit 131 ist ein Dreiphasen-Lock-in-Verstärker bezeichnet, der im wesentlichen der Anordnung gemäß Fig.16 entspricht und der drei Eingänge 116,126,25 und einen Ausgang 105,106 besitzt. Dieser Ausgang 105,106 beinhaltet ein Signal für einen Verstärkungsfaktor.

Eine Schrittmotor-Steuerung 136 weist einen Eingang 137 und zwei Ausgänge 138,139 auf, die auf das Leistungsteil 25 führen. Auf dem Eingang 137 erscheint ein Signal von einer Lichtschranke im Monochromator 22. Dieses Lichtschrankensignal ermöglicht eine automatische Kalibrierung der Wellenlänge des Monochromators 22. Das Signal für die Motorfrequenz wird von der Steuerung 136 auf die Leitung 138 gegeben. Die Drehrichtung dieses Motors wird jedoch über die Leitung 139 festgelegt. Mit 140 ist eine Einrichtung bezeichnet, in die über einen Kanal 141 Informationen parallel eingegeben werden können, um eine Frontplattentastatur einzusetzen. Für die serielle Eingabe von Informationen über einen Kanal 143 ist eine entsprechende Einrichtung vorgesehen. Schließlich ist mit 144 ein Schreiberausgang bezeichnet, der über die Leitung 145 mit einem Schreiber verbunden ist. Alle Einrichtungen 131,136,140,142,144 sind über Kanäle mit dem Mikroprozessor 118 verbunden.

Die Fig.18 zeigt ein Zeitdiagramm eines Dreiphasen-Lock-in-Verstärkers. Das Diagramm bei A stellt den Trigger der Lichtschranke (28,42 in Fig.1) dar, während das Diagramm bei B die Impulse der Referenzphase darstellt (109 in Fig.16). Die Meßphase wird durch die Impulse bei C angedeutet (111 in Fig.16), und die Impulse der Dunkelphase sind bei D (110 in Fig.16) angegeben. Das Zerhacker-Phasenende ist durch die Impulse bei E gezeigt (112 in Fig.16), während F den Zählerstand des Referenzsignals anzeigt. Der Zählerstand des Meßsignals ist bei G dargestellt, und das Ende des Meßzyklus' ist durch die Impulse bei Ha angegeben. Die Zähler-Reset-Impulse sind bei I dargestellt.

## Patentansprüche

1. Fotometer mit
einem Lichtzerhacker mit zwei Zerhackerscheiben (29,31) auf einer Achse,
einem zu messenden Objekt (6),
einer zwischen den Zerhackerscheiben angeordneten Lichtquelle (41) zum Beleuchten des Objekts,
einem Lichtdetektor (23),
einer ersten Lichtleitvorrichtung (19), die das Licht der Lichtquelle (41) als Referenzlicht zum Lichtdetektor (23) führt,
einer zweiten Lichtleitvorrichtung (14), die Meßlicht vom zu messenden Objekt (6) zum Lichtdetektor (23) führt,
einer dritten Lichtleitvorrichtung (13);
**dadurch gekennzeichnet,** daß
die dritte Lichtleitvorrichtung Licht (13) von der Lichtquelle (41) zum zu messenden Objekt (6) führt,
die erste, zweite und dritte Lichtleitvorrichtung (19, 14, 13) aus Bündeln von flexiblen Lichtleitfasern bestehen,
beide Zerhackerscheiben (29, 31) zur Erzeugung einer Meß-, Referenz- und Dunkelphase jeweils eine Aussparung von 120 Grad aufweisen, wobei sich die Aussparungen nicht überlappen.

2. Fotometer nach Anspruch 1, **dadurch gekennzeichnet,** daß ein Meßsignal und ein Referenzsignal über ein dispersives Element (22) zwecks Bestimmung der Meßwellenlänge dem Detektor (23) zugeführt sind.

3. Fotometer nach Anspruch 2, **dadurch gekennzeichnet,** daß ein Antrieb (24) vorgesehen ist, der das dispersive Element (22) bewegt.

4. Fotometer nach Anspruch 1, **dadurch gekennzeichnet,** daß die Zerhackerscheiben (29, 31) von einem Motor (39) angetrieben werden, der von einer Steuereinrichtung (40) gesteuert wird.

5. Fotometer nach Anspruch 1, **dadurch gekennzeichnet,** daß die Ausgangssignale des Detektors (23) mit Hilfe eines Prozessors (26) ausgewertet werden.

6. Fotometer nach Anspruch 3, **dadurch gekennzeichnet,** daß der Antrieb (24) in Abhängigkeit von der gewünschten Meßwellenlänge gesteuert wird.

7. Fotometer nach Anspruch 1, **dadurch gekennzeichnet,** daß die Enden (58; 59, 60) des ersten und zweiten Lichtleitfaserbündels (14, 19) räumlich derart zusammengefaßt sind, daß die Gesamtfläche der Enden der Lichtleitfaserbündel (14, 19) der Fläche eines Monochromator-Eintrittsspalts angepaßt ist.

8. Fotometer nach Anspruch 1, **dadurch gekennzeichnet,** daß zur Messung des Transmissions-Grads des Objekts (6) dieses Objekt (6) auf der direkten Verbindungslinie zumischen den Enden (11, 12) der zweiten und der dritten Lichtleitvorrichtungen (14, 13) angeordnet ist.

9. Fotometer nach Anspruch 1, **dadurch gekennzeichnet,** daß sich das eine dem Detektor (23) zugeordnete Ende (58) des Lichtleitfaserbündels der ersten Lichtleitvorrichtung (19) zwischen dem in zwei Hälften (59, 60) aufgespaltenen einen Ende des anderen Lichtleitfaserbündels der zweiten Lichtleitvorrichtung (14) befindet.

10. Fotometer nach Anspruch 1, **dadurch gekennzeichnet,** daß das eine dem Detektor (23) zugeordnete Ende des Lichtleitfaserbündels der ersten Lichtleitvorrichtung (19) in mehrere Teilbündel (61, 62; 63, 64) aufgespalten ist, die sich zwischen den Teilbündeln (65, 66, 67, 68) des anderen Lichtleitfaserbündels der zweiten Lichtleitvorrichtung (14) befinden.

11. Fotometer nach Anspruch 1, **dadurch gekennzeichnet,** daß ein analoges Ausgangssignal des Detektors (23) digitalisiert wird.

12. Verfahren zum Messen des Reflexions- oder Transmissionsgrads eines Objekts (6) mittels eines Photometers, wobei
a) in einem durch einen Lichtzerhacker (15) bestimmten ersten Zeitraum (t₁ - t₀) ein Referenzsignal (I_{REF}) der Lichtintensität I erfaßt wird;
b) in einem durch den Lichtzerhacker (15) bestimmten Zeitraum (t₂ - t₁) ein Meßsignal (I_{MESS}) der Lichtintensität I erfaßt wird;
c) in einem durch den Lichtzerhacker (15) bestimmten dritten Zeitraum (t₃ - t₂) eine Dunkelphase erfaßt wird, in der allenfalls noch eine Restlichtstärke (I_{REST}) detektiert wird,
**dadurch gekennzeichnet,** daß
d) der Lichtzerhacker (15) zwei auf einer gemeinsamen Achse (30) angeordnete Zerhackerscheiben (29, 31) aufweist, zwischen denen sich eine Lichtquelle (41) befindet, wobei diese Zerhackerscheiben (29,31) jeweils eine Aussparung (46, 47) von 120 Grad aufweisen, die sich nicht überlappen, und wobei diese Zerhackerscheiben (29, 31) um die gemeinsame Achse (30) gedreht werden;
e) das von der einen Zerhackerscheibe (29) freigegebene Licht der Lichtquelle (41) in der Referenzphase über einen ersten Lichtkanal (19) einem Detektor (23) zugeführt wird;
f) das von der anderen Zerhackerscheibe (31) freigegebene Licht in der Meßphase über einen zweiten Lichtkanal (13) auf eine Probe (6) gegeben wird und von dort zu dem Detektor (23) gelangt;
g) das von beiden Zerhackerscheiben (29, 31) zu beiden Lichtkanälen (13, 19) gesperrte Licht der Lichtquelle (41) eine Dunkelphase definiert.

## Claims

1. Photometer having
a light chopper having two chopper discs (29, 31) on one spindle, an object (6) to be measured,
a light source (41) disposed between the chopper discs for illuminating the object,
a light detector (23),
a first light-guiding device (19) which guides the light of the light source (41) to the light detector (23) as reference light, a second light-guiding device (14) which guides measurement light from the object (6) to be measured to the light detector (23), a third light-guiding device (13);
**characterized in** that
the third light-guiding device guides light (13) of the light source (41) to the object to be measured (6),
the first, second and third light-guiding devices (19, 14, 13) comprise bundles of flexible optical fibres,
both chopper discs (29, 31) for generating a measurement phase, reference phase and dark phase each have a cutout of 120 degrees, the cutouts not overlapping.

2. Photometer according to Claim 1, **characterized in** that a measurement signal and a reference signal are fed to the detector (23) via a dispersive element (22) for the purpose of determining the measurement wavelength.

3. Photometer according to Claim 2, **characterized in** that a drive (24) is provided which moves the dispersive element (22).

4. Photometer according to Claim 1, **characterized in** that the chopper discs (29, 31) are driven by a motor (39) which is controlled by a control device (40).

5. Photometer according to Claim 1, **characterized in** that the output signals of the detector (23) are evaluated with the aid of a processor (26).

6. Photometer according to Claim 3, **characterized in** that the drive (24) is controlled as a function of the desired measurement wavelength.

7. Photometer according to Claim 1, **characterized in** that the ends (58; 59, 60) of the first and second optical fibre bundles (14, 19) are spatially combined in such a way that the total area of the ends of the optical fibre bundles (14, 19) are matched to the area of a monochromater entrance slit.

8. Photometer according to Claim 1, **characterized in** that, to measure the radiant transmittance of the object (6), said object (6) is disposed on the direct connecting line between the ends (11, 12) of the second and the third light-guiding devices (14, 13).

9. Photometer according to Claim 1, **characterized in** that that one end (58) of the optical fibre bundle of the first light-guiding device (19) which is assigned to the detector (23) is situated between that one end of the other optical fibre bundle of the second light-guiding device (14) which is split into two halves (59, 60).

10. Photometer according to Claim 1, **characterized in** that that one end of the optical fibre bundle of the first light-guiding device (19) which is assigned to the detector (23) is split up into a plurality of component bundles (61, 62; 63, 64) which are situated between the component bundles (65, 66, 67, 68) of the other optical fibre bundle of the second light-guiding device (14).

11. Photometer according to Claim 1, **characterized in** that an analog output signal of the detector (23) is digitized.

12. Method for measuring the reflectivity or radiant transmittance of an object (6) by means of a photometer, in which
a) a reference signal (I_{REF}) of the light intensity I is detected in a first time period (t₁-t₀) determined by a light chopper (15);
b) a measurement signal (I_{MESS}) of the light intensity I is detected in a time period (t₂-t₁) determined by the light chopper (15);
c) a dark phase in which a residual luminous intensity (I_{REST}) is additionally detected if necessary is recorded in a third time period (t₃-t₂) determined by the light chopper (15),
**characterized in** that
d) the light chopper (15) has two chopper discs (29, 31) which are disposed on a common spindle (30) and between which a light source (41) is situated, said chopper discs (29, 31) having one cutout (46, 47) each of 120 degrees, which cutouts do not overlap, and said chopper discs (29, 31) being rotated around the common spindle (30);
e) that light from the light source (41) which is allowed through by the one chopper disc (29) in the reference phase is fed to a detector (23) via a first light channel (19);
f) that light allowed through by the other chopper disc (31) in the measurement phase is applied via a second light channel (13) to a specimen (6) and is fed from that point to the detector (23);
g) that light from the light source (41) which is blocked by the two chopper discs (29, 31) from the two light channels (13, 19) defines a dark phase.

## Revendications

1. Photomètre comprenant un hacheur de lumière présentant deux disques hacheurs (29, 31) sur un axe, un objet à mesurer (6),
une source de lumière (41) disposée entre les disques hacheurs pour l'éclairage de l'objet,
un détecteur de lumière (23),
un premier dispositif conducteur de lumière (19) qui guide la lumière de la source de lumière (41) en tant que lumière de référence au détecteur de lumière (23),
un second dispositif conducteur de lumière (14) qui guide la lumière de mesure de l'objet à mesurer (6) au détecteur de lumière (23),
et comprenant un troisième détecteur de lumière (13) ;
caractérisé en ce que
le troisième dispositif conducteur de lumière (13) guide la lumière de la source de lumière (41) à l'objet à mesurer (6),
les premier, second et troisième dispositifs conducteurs de lumière (19, 14, 13) se composent de faisceau de fibres optiques flexibles,
les deux disques hacheurs (29, 31) présentent, chacun, un évidement de 120 degrés pour la génération d'une phase de mesure, de référence et d'obscurité, les évidements ne se chevauchant pas.

2. Photomètre selon la revendication 1, caractérisé en ce qu'un signal de mesure et un signal de référence sont amenés au détecteur (23) par l'intermédiaire d'un élément de dispersion (22) en vue de déterminer la longueur des ondes de mesure.

3. Photomètre selon la revendication 2, caractérisé en ce qu'un entraînement (24) est prévu pour déplacer l'élément de dispersion (22).

4. Photomètre selon la revendication 1, caractérisé en ce que les disques hacheurs (29, 31) sont entraînés par un moteur (39) commandé par un dispositif de commande (40).

5. Photomètre selon la revendication 1, caractérisé en ce que les signaux de sortie du détecteur (23) sont analysés à l'aide d'un processeur (26).

6. Photomètre selon la revendication 3, caractérisé en ce que l'entraînement (24) est commandé en fonction de la longueur d'onde de mesure souhaitée.

7. Photomètre selon la revendication 1, caractérisé en ce que les extrémités (58; 59, 60) du premier et du second faisceau de fibres optiques (14, 19) sont assemblées dans l'espace de sorte que l'ensemble de la surface des extrémités des faisceaux de fibres optiques (14, 19) est adapté à la surface d'un interstice d'entrée du monochromateur.

8. Photomètre selon la revendication 1, caractérisé en ce que pour la mesure du degré de transmission de l'objet (6), l'objet (6) est disposé sur la ligne de connexion directe entre les extrémités (11, 12) des second et troisième dispositifs conducteurs de lumière (14, 13).

9. Photomètre selon la revendication 1, caractérisé en ce que l'extrémité (58) du faisceau de fibres optiques du premier dispositif conducteur de lumière (19), qui est associée au détecteur (23), se trouve entre l'extrémité, divisée en deux moitiés (59, 60), de l'autre faisceau de fibres optiques du second dispositif conducteur de lumière (14).

10. Photomètre selon la revendication 1, caractérisé en ce que l'extrémité (58) du faisceau de fibres optiques du premier dispositif conducteur de lumière (19), qui est associée au détecteur (23), est divisée en plusieurs faisceaux partiels (61, 62; 63, 64) qui se trouvent entre les faisceaux partiels (65, 66, 67, 68) de l'autre faisceau de fibres optiques du second dispositif conducteur de lumière (14).

11. Photomètre selon la revendication 1, caractérisé en ce qu'un signal de sortie analogique du détecteur (23) est numérisé.

12. Procédé pour la mesure du degré de transmission ou de réflexion d'un objet (6) au moyen d'un photomètre, procédé dans lequel
a) dans un premier espace temps (t₁ - t₀), déterminé par un hacheur (15), un signal de référence (I_{REF} ) de l'intensité lumineuse I est relevé ;
b) dans un premier espace temps (t₂- t₁), déterminé par le hacheur (15), un signal de mesure (I_{MESS}), de l'intensité lumineuse I est relevé ;
c) dans un troisième espace temps (t₃ - t₂), déterminé par le hacheur (15), une phase d'obscurité est relevée dans laquelle est au plus détectée encore une intensité lumineuse résiduelle (I_{REST}) ;
caractérisé en ce que
d) le hacheur de lumière (15) présente deux disques hacheurs (29, 31), disposés sur un axe commun (30), entre lesquels se trouve une source de lumière (41), ces disques hacheurs (29, 31) présentant chacun un évidement (46, 47) de 120 degrés ne se chevauchant pas, ces disques hacheurs (29, 31) tournant autour de l'axe commun (30) ;
e) la lumière de la source de lumière (41), libérée par le disque hacheur (29), est amenée, pendant la phase de référence, par l'intermédiaire d'un premier canal optique (19) au détecteur (23) ;
f) la lumière, libérée par l'autre disque hacheur (31), est envoyée, pendant la phase de mesure, à un échantillon (6) par l'intermédiaire d'un second canal lumineux (13) et, de là, parvient au détecteur (23) ;
g) la lumière de la source de lumière (41), bloquée par les deux disques hacheurs (29, 31) en direction des deux canaux optiques (13, 19), définit une phase d'obscurité.
